# EUROPÄISCHE PATENTANMELDUNG

(11) **EP 1 314 403 A1**
(43) Veröffentlichungstag der Anmeldung: **28.05.2003**
(21) Anmeldenummer: 02024789.6
(22) Anmeldetag: 07.11.2002
(51) Int. Cl.: A61C 19/10

(54) **Multicolor-Zahn als Schichtmuster für die Verblendtechnik**

(30) Priorität: 26.11.2001 DE 10157632
(71) Anmelder: Heraeus Kulzer GmbH & Co.KG, 63450 Hanau (DE)
(72) Erfinder: Mrotzek, Olaf, 88142 Wasserburg (DE); Savic, Novica, 63691 Ranstadt (DE)
(74) Vertreter: Kühn, Hans-Christian

(57) **Zusammenfassung**

Modellzahn zur Orientierung bei zahntechnischen Arbeiten, bei dem der natürliche, durchschnittliche Schichtverlauf von Halsmaterial, Dentin und Schmelz mit drei kontrastreich verschieden gefärbten, voneinander unterscheidbaren, transluzenten Materialien im Maßstab 1:1 realisiert ist.

## Beschreibung

Die Erfindung betrifft einen Modellzahn, an dem sich der Zahntechniker bei der Herstellung künstlicher Zähne bzw. Zahnverblendungen orientieren kann, und bei dem die Schichtung der Materialien Halsmasse, Dentin und Schmelz in Dimension und gegebenenfalls Transluzenz dem natürlichen Vorbild nachempfunden ist, während die Schichten aber kontrastreich eingefärbt sind, damit der Schichtverlauf erkannt werden kann und vom Zahntechniker bei der Bearbeitung des Kunstzahns bzw. der Verblendung nachvollzogen werden kann.

Der Schichtaufbau natürlicher Zähne ist nicht gleichmäßig, sondern die Schichtdicke variiert, und die Form der Schicht kann mehr oder weniger stark gekrümmt sein. Der natürliche Zahn besteht im wesentlichen aus drei Materialien, dem Halsmaterial, dem Dentin und dem Schmelz. Die Unregelmäßigkeit der Schichtung zeigt sich beispielsweise am Verlauf der Transluzenz bei Schneidezähnen: An den Rändern, wo der Zahnschmelzanteil hoch und die Dentinschicht dünn ist, ist die Transluzenz hoch, während sie in Richtung des Zahnfleischs abnimmt, weil die Dentinschicht dicker ist. Dabei kann es durchaus sein, dass die Schmelzschicht etwas dünner wird.

Beim Aufbau künstlicher Zähne und Zahnverblendungen auf Metallkronen kommt es darauf an, das Erscheinungsbild des Zahns möglichst natürlich aussehen zu lassen, vor allem wenn direkt benachbart noch natürliche Zähne vorhanden sind.

Dem Zahntechniker stehen eine Reihe von an sich bekannten Mitteln zur Verfügung, um dieses natürliche Aussehen zu erzeugen. Etwaige Metallkerne werden mit Opakerschichten abgedeckt, und anschließend wird durch Auftragen weiterer in Farbe und Transluzenz aus einer Palette auswählbarer Schichten der Zahn aufgebaut. Die dabei verwendeten Materialien sind in der Regel entweder Keramik oder lichthärtende Kunststoff- oder Composite-Materialien.

Der Zahntechniker versucht für gewöhnlich, den natürlichen Verlauf der Schichtung so gut es geht ohne besondere Hilfsmittel nachzuvollziehen.

Um dem Techniker nun die Imitation des natürlichen Schichtaufbaus zu erleichtern, wurde ein Modellzahn entwickelt, an dem der Zahntechniker direkt sehen kann, an welcher Stelle des Zahns welche Schicht wie dick vorhanden ist.

Bekannt sind Modellzähne für die Einübung zahnärztlicher Präparationen. DE 38 27 657 beschreibt einen geschichteten Modellzahn, bei dem das natürliche Vorbild in Härte und Farbgebung imitiert wird. Zusätzlich kann Röntgenkontrastmaterial beigegeben werden. DE 195 00 658 sieht eine farbliche Kennzeichnung der Schichten vor, welche erst nachträglich, also nach der Präparationsübung, beispielsweise durch UV Licht sichtbar gemacht wird.

Im Gegensatz dazu wird bei der vorliegenden Erfindung der natürliche, durchschnittliche Schichtverlauf im Modellzahn mit drei kontrastreich verschieden gefärbten, voneinander unterscheidbaren transluzenten Materialien im Maßstab 1:1 realisiert. Von Vorteil ist es dabei, wenn die Transluzenz der Materialien im wesentlichen jeweils derjenigen des natürlichen Vorbilds entspricht. Es kann aber auch durch die Wahl der Farben der Schichtverlauf nachvollzogen werden.

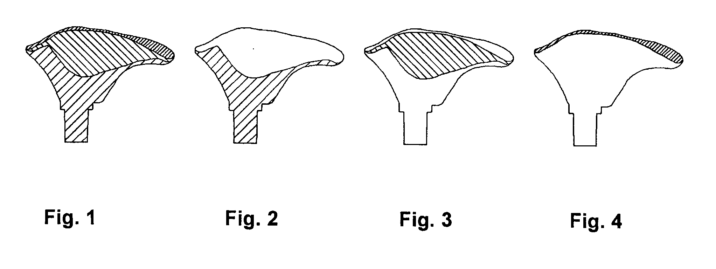

Fig. 1 zeigt das Modell eines Schneidezahns, bei dem (von unten nach oben verschieden schraffiert dargestellt) blaues Material für Halsmasse, gelbes Material für das Dentin und schwarz bzw. rauch- oder anthrazitgefärbtes Material für den Schmelz verwendet werden.
Fig. 2 zeigt separat die Zahnhalsmasse,
Fig. 3 entsprechend das Dentin und
Fig. 4 das Schmelz-bzw. Schneide-Material.

Der dargestellte Modellzahn erscheint schwärzlich bis grau dort, wo die Schmelzschicht besonders stark vertreten ist, grau-grünlich dort, wo wenig Schmelz, eine dünnere Schicht Dentin und dahinter die blaue Halsmasse durchscheint, und eher schmutziggelb dort, wo das Dentin besonders stark ausgebildet ist. Der Schichtaufbau lässt sich noch besser erkennen, wenn hinter dem Zahn eine Lichtquelle betrieben wird. Es ist auch möglich, den Zahn im Drauflicht zu betrachten, um die äußere Schmelzschicht besser beurteilen zu können. In der Wahl der Farbe der einzelnen Schichten ist man nur dadurch beschränkt, dass jede als solche neben den anderen erkennbar sein sollte. Schwarz und weiß gelten in diesem Zusammenhang als Farben.

## Patentansprüche

1. Modellzahn zur Orientierung bei zahntechnischen Arbeiten, bei dem der natürliche, durchschnittliche Schichtverlauf von Halsmaterial, Dentin und Schmelz mit drei kontrastreich verschieden gefärbten, voneinander unterscheidbaren, transluzenten Materialien im Maßstab 1:1 realisiert ist.

2. Modellzahn nach Anspruch 1, bei dem Halsmaterial blau, Dentin gelb und Schmelz anthrazit oder schwarz eingefärbt sind.

3. Modellzahn nach Anspruch 1, bei dem die Transluzenz der Materialien jeweils derjenigen des natürlichen Vorbilds entspricht.
